**Europäisches Patentamt**

**European Patent Office**

**Office européen des brevets**

(19)

(11) Numéro de publication: **0 271 537**
**B1**

(12) **FASCICULE DE BREVET EUROPEEN.**

(45) Date de publication du fascicule du brevet: **03.10.90**

(51) Int. Cl.⁵: **G 01 V 1/38**

(21) Numéro de dépôt: **87903883.4**

(22) Date de dépôt: **12.06.87**

(86) Numéro de dépót international:
**PCT/FR87/00216**

(87) Numéro de publication internationale:
**WO 87/07732 17.12.87 Gazette 87/28**

(54) **PROCEDE POUR DETERMINER LA GEOMETRIE D'UN DISPOSITIF D'EMISSION D'ONDES SISMIQUES MULTI-SOURCES.**

(30) Priorité: **13.06.86 FR 8608538**

(43) Date de publication de la demande:
**22.06.88 Bulletin 88/25**

(45) Mention de la délivrance du brevet:
**03.10.90 Bulletin 90/40**

(84) Etats contractants désignés:
**BE DE GB IT NL**

(56) Documents cités:
**GB-A-2 113 391**
**US-A-3 962 672**
**US-A-4 087 780**
**US-A-4 124 990**

(73) Titulaire: **INSTITUT FRANCAIS DU PETROLE**
**4, Avenue de Bois-Préau**
**F-92502 Rueil-Malmaison (FR)**

(72) Inventeur: **BRAC, Jean**
**5, rue Réaumur**
**F-17600 Saujon (FR)**

Courier Press, Leamington Spa, England.

## Description

L'invention a pour objet un procédé de détermination de la géométrie d'un dispositif d'émission d'ondes sismiques multi-sources.

Un dispositif d'émission d'ondes sismiques est utilisé pour engendrer dans une masse d'eau des ébranlements sismiques qui se propagent vers le fond et sont réfléchis ou diffractés par les discontinuités du sous-sol immergé. Les ondes renvoyées vers la surface, sont captées par des ensembles d'hydrophones répartis le long d'une ou plusieurs flûtes sismiques remorquées derrière un navire. Les signaux sismiques qu'ils produisent sont transférés à un laboratoire sismique, dans le but d'obtenir des enregistrements représentatifs de la configuration du sous-sol.

Les sources sismiques utilisées sont par exemple des canons à air, des canons à eau ou d'autres sources que l'on déclenche simultanément ou successivement. On cherche par ces déclenchements combinés, à augmenter la puissance acoustique dissipée, à améliorer la forme de l'impulsion résultante émise ou signature ou encore à obtenir un diagramme d'émission plus directionnel. L'effet obtenu par un déclenchement en séquence, dépend très précisément de la configuration des sources employées et des intervalles de temps séparant leurs déclenchements.

Il est donc important de connaître la géométrie du dispositif d'émission c'est-à-dire la disposition relative de toutes les sources sismiques les unes par rapport aux autres.

Les dispositifs d'émission comportent par exemple plusieurs sous-ensembles constitués chacun d'un alignement de plusieurs sources sismiques disposées à intervalles choisis le long d'un "ombilic" de remorquage comportant généralement des câbles de remorquage, des canalisations d'amenée de fluides gazeux et/ou de liquides, des câbles d'alimentation électrique, des lignes de transmission de signaux etc.

Les différents sous-ensembles sont remorqués parallèlement les uns aux autres et des moyens de déflexion tels que des paravanes, sont employès pour les maintenir écartés latéralement les uns par rapport aux autres. Différents systèmes de contrôle d'immersion comportant par exemple des plateformes suspendues à des flotteurs ou des plateformes munies d'ailerons à orientation réglable et de flotteurs, permettent d'immerger les sources à des profondeurs choisies. De tels systèmes de déflexion et d'immersion contrôlée, sont décrits par exemple dans les brevets français 2.397.974, 2.420.478 et 2.523.542.

Il est facile de mesurer la distance longitudinale séparant les différentes sources le long d'un même ombilic. Par contre, il est beaucoup plus difficile de connaître avec précision l'écartement réel de chaque source par rapport à la trajectoire du navire pendant sa progression ainsi que sa profondeur d'immersion, au moment où, la vitesse d'évolution s'étant stabilisée et le dispositif d'émission-réception ayant pris une disposition stable dans l'eau, les opérations de prospection sismique peuvent commencer. Cependant, l'état de la mer, les courants, les conditions de remorquage peuvent changer et modifier ainsi la disposition réelle de l'ensemble d'émission-rèception d'une série de déclenchements à l'autre. Il en résulte que la signature et/ou le diagramme directif de l'ensemble sont différents pour une chronologie identique de déclenchements.

Les enregistrements obtenus à partir de ces émissions sont rendus plus lisibles de façon classique, par des corrélation effectuées entre les signaux captés par le dispositif de réception et la "signature" globale du dispositif. Pour déterminer celle-ci en tous points de l'espace, il est nécessaire de combiner d'une façon particulière les signatures individuelles de chacune des sources, en tenant compte de leur disposition relative les unes par rapport aux autres. Un premier procédé, décrit dans la demande de brevet français publiée 2.582.107 consiste à établir un catalogue préalable contenant les signatures de chacune des sources du dispositif d'émission déclenchée isolément, pour un grand nombre de valeurs des paramètres intervenant dans le fonctionnement des sources, notamment de la profondeur d'immersion et, en opération, compte-tenu des valeurs réelles des paramètres mesurées au moment des "tirs", à combiner les signatures correspondantes prélevées dans le catalogue, éventuellement corrigées, de manière à reconstituer par synthèse la signature globale à l'infini dans toutes les directions de l'espace.

La signature globale du dispositif d'émission peut aussi être obtenue en mesurant la signature de chacune des sources du dispositif d'émission, au voisinage de celle-ci et à les combiner après avoir corrigé chacune d'elles pour tenir compte des interactions de fonctionnement. Les corrections que l'on apporte aux signatures dépendent étroitement de la disposition relative des différentes sources les unes par rapport aux autres. Un procédé de ce type est décrit par exemple dans la demande de brevet européen publiée no 66.423.

Le procédé selon l'invention permet de connaître avec précision la géométrie d'un dispositif d'émission sismique multi-sources quelle que soit sa configuration, et permet donc la mise en oeuvre des procédés antérieurs de reconstitution de signatures.

Le procédé comporte l'immersion de plusieurs capteurs à des distances déterminées des différentes sources. Il est caractérisé en ce qu'il comporte le déclenchement isolé d'une première source sismique, la détection, par les capteurs, des ondes acoustiques émanant de la source sismique déclenchée, la répétition des deux étapes précédentes successivement pour chacune des autres sources sismiques du dispositif d'émission, la mesure, à partir des signaux captés, des valeurs prises par au moins un paramètre et représentatives de la distance parcourue par les ondes acoustiques depuis chacune des sources déclenchées successivement jusqu'aux différents capteurs, la combinaison des valeurs des différents paramètres mesurés, de manière à déterminer la position relative des différentes sources sismiques les unes par rapport aux autres comme défini dans la revendication 1.

Le procédé peut comporter la mesure de la profondeur d'immersion de plusieurs sources sismiques du dispositif d'émission et la détermination des coordonnées de toutes les sources sismiques relativement à l'une d'entre elles.

Il peut comporter aussi l'immersion d'au moins un capteur de référence, à une distance fixe prédéterminée du navire, la détermination des valeurs successives prises par le paramètre mesuré lors du déclenchement des différentes sources sismiques, et le calcul de la position des différentes sources sismiques relativement au(x) capteur(s) de référence.

Le procédé peut encore comporter le positionnement d'au moins un capteur en position fixe par rapport à un objet remorqué par le navire, une flûte sismique par exemple, la détermination des valeurs successives prises par le paramètre représentatif lors des déclenchements successifs des différentes sources sismiques et le calcul de la position des différentes sources sismiques relativement au capteur associé à l'objet.

Le paramètre représentatif de la distance peut être le temps de propagation des ondes acoustiques ou encore le déphasage des ondes captées par rapport aux ondes émises.

D'autres caractéristiques et avantages du procédé apparaîtront à la lecture de la description d'un mode de réalisation donné à titre d'exemple non limitatif, en se référant aux dessins annexés où:

la figure 1 représente une vue de dessus schématique d'une disposition des différentes sources sismiques d'un dispositif d'émission remorqué par un navire;

la figure 2 représente de façon très schématique deux sources disposées en ligne le long d'un même "ombilic" d'alimentation; et

la figure 3 représente schématiquement les différents trajets acoustiques mesurés entre deux alignements de deux sources.

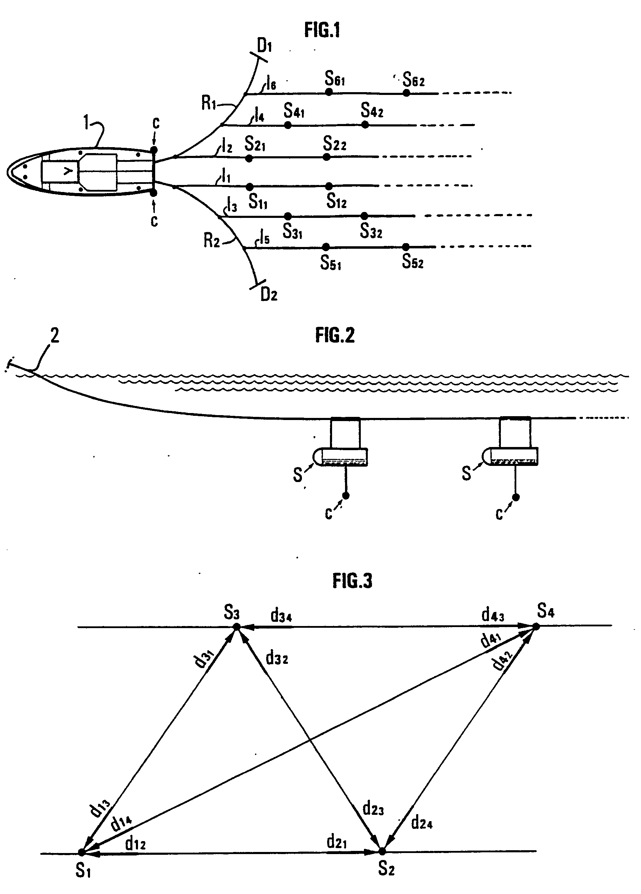

Un dispositif d'émission, décrit à titre d'exemple, comporte selon la figure 1 plusieurs alignements de sources $l_1$, $l_2$, ... $l_6$ déployés derrière un navire 1 qui les remorque. Chaque alignement comporte plusieurs sources S réunies par un ensemble de liaison ou "ombilic" 2 (fig. 2) comportant des câbles de remorquage, des canalisations de gaz comprimé ou de liquide sous pression nécessaires au fonctionnement des sources notamment des canons à air ou à eau, des câbles d'alimentation èlectrique, des lignes de transmission de signaux etc.

Le déploiement des sources est effectué en fixant les câbles de remorquage associés à chaque ligne de sources sismiques ($l_1$ à $l_6$) à un ou deux câble $R_1$, $R_2$ fixés au navire et déportés latéralement par rapport à l'axe longitudinal de celui-ci. L'écartement latéral de chaque câble $R_1$, $R_2$ est obtenu au moyen d'un paravane d'un type connu fixé à son extrémité. On peut utiliser par exemple le divergent profilé décrit dans le brevet français n° 2.523.542.

Le procédé selon l'invention comporte l'utilisation de capteurs (C) disposés à proximité immédiate de chacune des sources sismiques, à 1 m au-dessus par exemple ou encore au-dessous, comme il est représenté. Un tel capteur dit capteur de proximité est généralement utilisé pour détecter l'instant de déclenchement effectif d'une source sismique ou bien obtenir la forme de l'impulsion qu'elle émet (signature).

Le procédé comporte le déclenchement d'une première source sismique de dispositif d'émission et la détection par les capteurs C associés respectivement aux autres sources, d'au moins un paramètre représentatif de la distance parcourue par les ondes acoustiques émanant de la source sismique déclenchée. Pour faciliter la représentation, quatre sources $S_1$, $S_2$, $S_3$, $S_4$ ont été représentées sur la figure 3. La source $S_1$ étant déclenchée, les capteurs C détectent les ondes acoustiques qui se sont propagées jusqu'aux autres sources $S_2$, $S_3$, $S_4$. La vitesse de propagation dans l'eau des ondes étant connue, on peut donc, en mesurant les retards des signaux captés par rapport aux signaux émis, connaître la distance $d_{12}$, $d_{13}$, $d_{14}$, séparant la source $S_1$ des sources $S_2$, $S_3$ et $S_4$.

Les signaux détectés par les différents capteurs C sont transmis à un système d'acquisition disposé sur la navire (et non représenté) par des lignes de transmission associées aux "ombilics" de liaison 2 et enregistrés. On peut utiliser un système d'acquisition indépendant ou éventuellement le laboratoire sismique de bord. L'opération précédente est répétée successivement pour les autres sources $S_2$, $S_3$, $S_4$. Chacune d'elle étant déclenchée isolément, l'on détecte l'arrivée aux capteurs C associés aux autres sources, des ondes acoustiques qu'elle émet et l'on transmet les signaux reçus au système d'acquisition sur le navire.

Lorsque toutes les sources sismiques du dispositif d'émission ont été successivement actionnées et que tous les signaux détectés ont été enregistrés, on procède à diverses corrections pour tenir compte du fait que chaque source sismique ne coïncide pas tout à fait avec le capteur de proximité associé C et aussi pour tenir compte de l'emplacement réel du centre d'émission de la source déclenchée. Dans le cas d'un canon à air lâchant dans l'eau un certain volume de gaz sous pression, le centre d'émission sera le centre de la bulle qui implose en produisant des ondes acoustiques.

Pour faciliter le repérage exact de l'instant d'arrivée des ondes acoustiques on effectue de préférence une corrélation entre le signal produit par chaque capteur C en réponse aux ondes acoustiques reçues avec le signal correspondant émis tel qu'il est détecté par le capteur C associé à la source déclenchée.

Les intervalles de temps corrigés ayant été déterminés, on dispose d'autant d'ensembles de valeurs de distance qu'il y a de sources sismiques. A la source $S_2$ se trouvent associées les distances $d_{21}$, $d_{23}$, $d_{24}$ qui la séparent des sources $S_1$, $S_3$, $S_4$. Deux autres triplets de valeurs $d_{31}$, $D_{32}$ et $D_{34}$ d'une part et $d_{41}$, $d_{42}$ et $d_{43}$ d'autre part, se trouvent associés respectivement aux sources $S_3$ et $S_4$.

On utilise alors une méthode connue de triangulation telle que la méthode des moindres carrés bien connue des spécialistes, pour déterminer les coordonnées relatives de toutes les sources par rapport à l'une d'entre elles.

La détermination de la position de toutes les sources par rapport au navire est possible si l'on associe à celui-ci un ou plusieurs capteurs C (Fig. 1). On dispose alors à chaque déclenchement de source sismique, d'au moins une mesure de la distance séparant celle-ci du navire. Avec deux capteurs C en position fixe par rapport au navire, on peut déterminer les coordonnées de toutes les sources sismiques du dispositif d'émission.

On peut aussi déterminer la position du dispositif d'émission relativement à d'autres objets et notamment à la tête d'une flûte sismique également remorquée par le navire. D'autres capteurs contenus dans les sections de tête de la flûte sont alors utilisés pour recevoir les impulsions émanant successivement des différentes sources.

Si les sources sismiques du dispositif d'émission ne sont pas immergés à une profondeur identique, on mesure leurs profondeurs d'immersion respectives et on les transmet au système d'acquisition. L'exploitation des données télémétriques et des valeurs de profondeur permet de déterminer les coordonnées dans l'espace de toutes les sources.

La mesure des profondeurs d'immersion est effectuée avantageusement en utilisant les capteurs de proximité des différentes sources sismiques, de la manière indiquée dans la demande de brevet français publiée 2.582.107 précitée. Chaque capteur de proximité est associé à une chaîne d'amplification dont le gain est susceptible de prendre deux valeurs de gain très différentes, une première pour la mesure de la profondeur d'immersion, une seconde plus faible pour la détection des ondes acoustiques provenant des sources successivement actionnées.

Le procédé selon l'invention peut être mis en oeuvre conjointement avec celui décrit dans la demande de brevet précitée et relatif à la détermination de la "signature" globale à grande distance d'un dispositif d'émission multi-sources. Cette signature globale est obtenue en établissant un catalogue des signatures particulières de toutes les sources déclenchées l'une après l'autre, ces signatures ètant détectées au moyen de capteurs de proximité tels que les capteurs C.

On ne sortirait pas du cadre de l'invention en remplaçant la mesure des temps, de propagation des ondes acoustiques par celle du déphasage des signaux reçus par les différents capteurs de proximité par rapport aux signaux émis successivement par chacune des sources. Cette variante peut s'appliquer notamment aux sources vibratoires.

On ne sortirait pas non plus du cadre de l'invention en utilisant un nombre de capteurs différent de celui des sources sismiques. Un même capteur pourra être associé par exemple à plusieurs sources à condition que les distances qui le séparent de celles-ci soient bien déterminées. De la même façon que précédemment le calcul des distances inter-sources est effectué après introduction des corrections pour tenir compte de l'éloignement réel de chaque capteur par rapport aux sources sismiques associées.

## Revendications

1. Procédé de détermination de la géométrie d'un dispositif d'émission sismique constitué d'une pluralité de sources sismiques immergées dans l'eau à distance les unes des autres et remorquées par un navire comportant l'immersion de plusieurs capteurs (C) à des distances déterminées des différentes sources sismiques caractèrisé en C qu'il comporte les étapes suivantes:

le déclenchement isolé d'une première source sismique ($S_{11} \ldots S_{61}$);

la détection par les capteurs (C) des ondes acoustiques émanant de la source sismique déclenchée;

la répétition des deux étapes précédentes successivement pour chacune des autres sources sismiques du dispositif d'émission;

la mesure, à partir des signaux captés, des valeurs prises par au moins un paramètre et représentatives de la distance parcourue par les ondes acoustiques depuis chacune des sources déclenchées successivement jusqu'aux différents capteurs; et

la combinaison des valeurs de différents paramètres mesurés de manière à déterminer la position relative des différentes sources sismiques les unes par rapport aux autres.

2. Procédé selon la revendication 1, caractérisé en ce qu'il comporte la mesure de la profondeur d'immersion de plusieurs sources sismiques du dispositif d'émission et la détermination des coordonnées de toutes les sources sismiques relativement à l'une d'entre elles.

3. Procédé selon la revendication 1 ou 2, caractérisé en ce que l'on dispose au moins un capteur de référence en position fixe par rapport au navire, on détermine les valeurs successives prises par ledit paramètre lors des déclenchements successifs des différentes sources sismiques, et l'on calcule la position des différentes sources sismiques relativement au capteur de référence.

4. Procédé selon la revendication 1, caractérisé en ce que le paramètre représentatif de la distance est le temps de propagation des ondes acoustiques.

5. Procédé selon la revendication 1, caractérisé en ce que le paramètre représentatif de la distance est le déphasage entre les ondes captées et les ondes émises par la source sismique déclenchée.

6. Procédé selon la revendication 2, caractérisé en ce que chaque capteur est adapté à détecter les ondes acoustiques reçues et la profondeur d'immersion de la source sismique associée.

7. Procédé selon la revendication 3, caractérisé en ce que chaque capteur de référence est fixé à la coque du navire.

8. Procédé selon l'une des revendications 1 à 3, caractérisé en ce que l'on dispose au moins un capteur en position fixe par rapport à un objet remorqué par le navire, on détermine les valeurs successives prises par ledit paramètre lors des déclenchements successifs des différentes sources et l'on calcule la position des différentes sources sismiques relativement au capteur associé audit objet.

9. Procédé selon la revendication 8, caractérisé en ce que ledit objet est une flûte sismique.

**Patentansprüche**

1. Verfahren zur Bestimmung der Geometrie einer seismischen Sendeeinrichtung bestehend aus einer Vielzahl seismischer Quellen, die im Wasser unter Abstand zueinander getaucht und von einem Fahrzeug geschleppt werden, umfassend das Tauchen mehrerer Empfänger (C) unter bestimmten Entfernungen von den verschiedenen seismischen Quellen, dadurch gekennzeichnet, daß es die folgenden Stufen umfaßt:
das isolierte Auslôsen einer ersten seismischen Quelle (S$_{11}$ . . . S$_{61}$);
die Ermittlung der akustischen von der ausgelösten seismischen Quelle stammenden Wellen durch die Empfänger bzw. Aufnehmer (C);
das Wiederholen der beiden vorhergehenden Stufen aufeinanderfolgend für jede der seismischen Quellen der Aussendeeinrichtung;
das Messen, ausgehend von den empfangenen Signalen der von wenigstens einem Parameter eingenommenen Werte und welche repräsentativ für die Entfernung sind, die von den akustischen Wellen von jeder der ausgelösten Quellen nacheinander bis zu den verschiedenen Empfängern durchlaufen wird; und
die Kombination der Werte unterschiedlicher gemessener Parameter, derart, daß die relative Position der verschiedenen seismischen Quellen bezüglich einander bestimmt wird.

2. Verfahren nach Anspruch 1, dadurch gekennzeichnet, daß es das Messen der Tauchtiefe mehrerer seismischer Quellen der Sende bzw. Emissionsvorrichtung sowie die Bestimmung der Koordinaten sämtlicher seismischer Quellen relativ zueinander umfaßt.

3. Verfahren nach Anspruch 1 oder 2, dadurch gekennzeichnet, daß man wenigstens einen Bezugsempfänger in fester Stellung, bezogen auf das Fahrzeug, anordnet, die aufeinanderfolgenden von diesem Parameter bei aufeinanderfolgenden Auslösungen der verschiedenen seismischen Quellen eingenommenen Werte bestimmt und man die Position der verschiedenen seismischen Ouellen relativ zum Bezugsempfänger berechnet.

4. Verfahren nach Anspruch 1, dadurch gekennzeichnet, daß der für die Entfernung repräsentative Parameter die Fortpflanzungszeit der akustischen Wellen ist.

5. Verfahren nach Anspruch 1, dadurch gekennzeichnet, daß der für die Entfernung repräsentative Parameter die Phasenverschiebung zwischen den empfangenen Wellen und den von der ausgelösten seismischen Quelle ausgesandten Wellen ist.

6. Verfahren nach Anspruch 2. dadurch gekennzeichnet, daß jeder Empfänger bzw. Aufnehmer so ausgelegt ist, daß er die empfangenen akustischen Wellen sowie die Tauchtiefe der zugeordneten seismischen Ouelle erfaßt bzw. ermittelt.

7. Verfahren nach Anspruch 3, dadurch gekennzeichnet, daß jeder Bezugsempfänger am Rumpf des Fahrzeugs befestigt ist.

8. Verfahren nach einem der Ansprüche 1 bis 3, dadurch gekennzeichnet, daß man wenigstens einen Empfänger in fester Lage, bezogen auf einen vom Fahrzeug geschleppten Gegenstand, anordnet, man die aufeinanderfolgenden von diesem Parameter eingenommenen Werte bei aufeinanderfolgenden Auslösungen der unterschiedlichen Quellen bestimmt und die Position der verschiedenen seismischen Quellen relativ zu dem diesen Gegenstand zugeordneten Empfänger berechnet.

9. Verfahren nach Anspruch 8, dadurch gekennzeichnet, daß dieser Gegenstand eine seismische Flöte bzw. langes seismisches Kabel ist.

**Claims**

1. Method for determining the geometry of a device for the emission of seismic waves, comprising a number of seismic sources immersed in water at a distance from each other and towed by a vessel, together with the immersion of several sensors (C) at predetermined distances from the various seismic sources, characterised in that it comprises the following stages:
a separate triggering operation of a first seismic source (S$_{11}$ . . . S$_{61}$)
the detection, by the sensors (C) of the sound waves emitted by the seismic source when triggered;
the repetition of the two preceding stages in succession, for each of the other seismic sources forming part of the emission device;
a measurement, using the signals received, of the values relating to at least one parameter, these being representative of the distance travelled by the sound waves from each of the sources which are triggered in succession, up to the various different sensors, and
a combination of the values for the various different parameters measured in order to determine the relevant position of the various seismic sources relative to each other.

2. Method in accordance with claim 1, characterised in that it includes a measurement of the depth of immersion of several seismic sources forming part of the emission device and determination of the co-ordinates for all the seismic sources relative to each other.

3. Method in accordance with claims 1 or 2, characterised in that at least one reference sensor is provided in a position which is fixed relative to the vessel and the successive values relating to the said parameter are determined during the successive triggering operations of the various seismic sources, the position of the various seismic sources being calculated relative to the reference sensor.

4. Method in accordance with claim 1, characterised in that the parameter which is representative of the distance is the time for propagating the acoustic waves.

5. Method in accordance with claim 1, characterised in that the parameter which is representative of the distance is the phase displacement between the sound waves received and the sound waves emitted by the seismic source when triggered.

6. Method in accordance with claim 2, characterised in that each sensor is designed to detect the sound waves received and the depth of immersion of the associated seismic source.

7. Method in accordance with claim 3, characterised in that each reference sensor is fixed to the hull of the vessel.

8. Method in accordance with one of claims 1 to 3, characterised in that at least one sensor is provided in a position fixed relative to an object being towed by the vessel and the successive values relative to the said parameter are determined when carrying out the successive triggering operations of the various seismic sources, the position of the various seismic sources being calculated relative to the sensor associated with the said object.

9. Method in accordance with claim 8, characterised in that the said object is a seismic boom.

## FIG.1

## FIG.2

## FIG.3